Europäisches Patentamt

European Patent Office

Office européen des brevets

(11) Publication number: **0 290 352 B1**

# EUROPEAN PATENT SPECIFICATION

(45) Date of publication of patent specification: **04.08.93**   (51) Int. Cl.⁵: **G01K 13/00**, G01K 1/00

(21) Application number: **88401122.2**

(22) Date of filing: **06.05.88**

(54) **Electronic clinical thermometer.**

(30) Priority: **07.05.87 JP 109642/87**

(43) Date of publication of application:
**09.11.88 Bulletin 88/45**

(45) Publication of the grant of the patent:
**04.08.93 Bulletin 93/31**

(84) Designated Contracting States:
**BE DE FR GB IT NL SE**

(56) References cited:
**EP-A- 0 239 824**

**PATENT ABSTRACTS OF JAPAN, vol. 9, no. 101 (P-353)[1824], 2nd May 1985 & JP-A-59 226 837**

**PATENT ABSTRACTS OF JAPAN, vol. 6, no. 92 (P-119)[970], 29th May 1982 & JP-A-57 28 226**

**PATENT ABSTRACTS OF JAPAN, vol. 6, no. 195 (P-146)[1073], 5th October 1982 & JP-A-57 104 830**

(73) Proprietor: **TERUMO KABUSHIKI KAISHA No. 44-1, Hatagaya 2-chome, Shibuya-ku Tokyo 151(JP)**

(72) Inventor: **Hanzawa, Yoshiki 2243-15, Ochiainakazawa Tama-shi Tokyo(JP)**
Inventor: **Muramoto, Yutaka c/o Terumo Kabushiki Kaisha 2656-1, Oh-buchi Fuji-shi Shizuoka-ken(JP)**

(74) Representative: **Joly, Jean-Jacques et al Cabinet Beau de Loménie 158, rue de l'Université F-75340 Paris Cédex 07 (FR)**

Rank Xerox (UK) Business Services
(3.10/3.6/3.3.1)

EP 0 290 352 B1

## Description

The present invention relates to an electronic clinical thermometer and, more particularly, to a prediction type electronic clinical thermometer for predicting/displaying an equilibrium temperature prior to a real-time measured temperature.

Generally, when a temperature is measured by a thermistor or the like, a passed time period of at least 10 to 15 minutes from the start of measurement is required to achieve a thermal equilibrium and cause a real-time measured temperature to be substantially equal to an equilibrium temperature. For this reason, a method of predicting an equilibrium temperature prior to a real-time measured temperature by adding a predetermined extra value (to be referred to as an addition value hereinafter) to a measured temperature has been proposed.

However, a raising curve of a measured temperature varies depending on measuring states, objects to be measured, and the like. Therefore, if a common addition value is determined, reliability of a measured equilibrium temperature is degraded, and an excessively long passed time period is required to predict a sufficiently reliable equilibrium temperature. For this reason, more quick and reliable prediction of equilibrium temperatures using generalized addition values have been desired.

On the other hand, a demand has arisen for a compact system. This may be realized by performing all the processing by software using a microprocessor. However, if processing speed is taken into account, software is not necessarily an almighty means. Accordingly, another problem has been posed, i.e., how to combine hardware with software for higher-speed prediction of an equilibrium temperature with a compact system.

Valid only for contracting states BE, DE, FR, GB, IT

One proposed solution is disclosed in document EP-A-0 239 824 filed by the present applicant and comprised in the state of the art under the provisions of Article 54(3) Epc. The relevant features of that document are recited in the preamble of claim 1 herein.

It is an object of the present invention to provide a compact electronic clinical thermometer, which can solve above-described problems and quickly predict/display a highly reliable equilibrium temperature.

In order to solve the problems, the present invention proposes an electronic clinical thermometer as defined in claim 1 herein.

In such an arrangement, the computing means computes an addition value from a raised temperature calculated by the raised temperature calculating means on the basis of a temperature measured by the temperature measuring means and from a passed time period measured by the time measuring means, the adding means adds the resultant addition value to the temperature measured by the temperature measuring means, and the display means displays the addition result as a predicted equilibrium temperature.

This invention can be more fully understood from the following detailed description when taken in conjunction with the accompanying drawings, in which:

Fig. 1 is a block diagram showing a function of an electronic clinical thermometer according to an embodiment of the present invention;

Fig. 2 is a block diagram showing an electronic clinical thermometer realized by a microprocessor according to the embodiment of the present invention;

Fig. 3 is a processing flow chart of the electronic clinical thermometer according to the embodiment of the present invention;

Fig. 4 is a flow chart showing an operation of a temperature measuring unit according to an embodiment of the invention;

Fig. 5 is a flow chart showing a control routine of a CPU according to the embodiment;

Figs. 6A and 6B show a flow chart of a prediction routine according to the sample;

Figs. 7A and 7B are graphs of weighting according to the sample; and

Fig. 8 is a timing chart of processing according to the embodiment.

An embodiment of the present invention will be described in detail in accordance with the accompanying drawings.

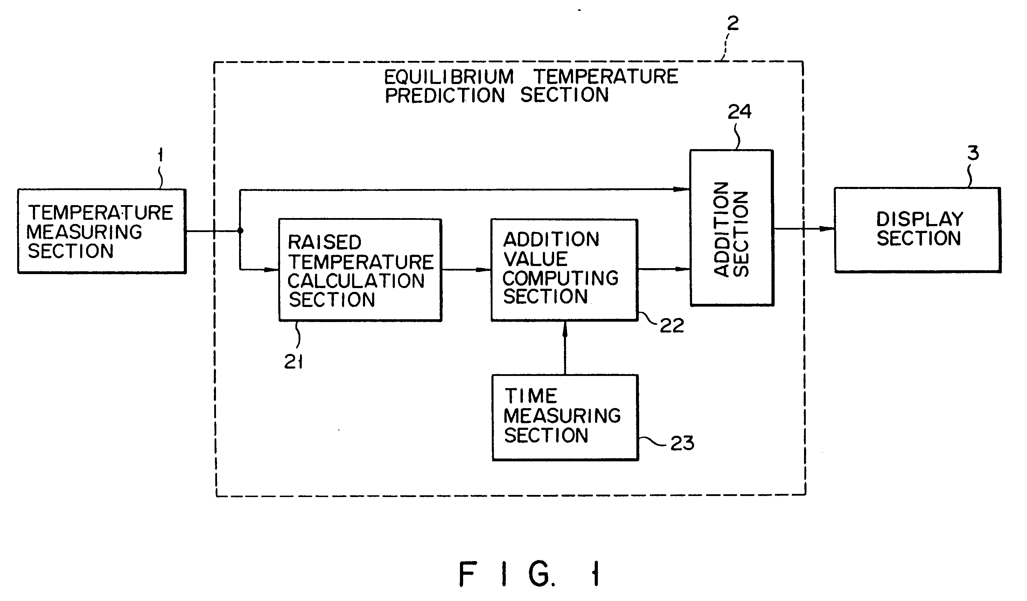

Fig. 1 is a block diagram showing a function of an electronic clinical thermometer according to the embodiment of the present invention. Referring to Fig. 1, reference numeral 1 denotes a temperature measuring unit for measuring a real-time temperature using a thermistor or the like to be brought into contact with a portion to be measured. Measured temperature T from temperature measuring unit 1 is raised curvilinearly with the lapse of time. Reference numeral 2 denotes an equilibrium temperature prediction unit for predicting equilibrium temperature Tp on the basis of measured temperature T from

2

temperature measuring unit 1.

Equilibrium temperature prediction unit 2 comprises raised temperature calculation unit 21 for calculating measured temperature rise $\Delta T$ within a predetermined passed time period, time measuring unit 23 for measuring passed time period $t$ from the start of prediction of equilibrium temperature Tp, addition value computing unit 22 for computing addition value U to be added to the measured temperature for calculating the equilibrium temperature on the basis of measured temperature rise $\Delta T$ from raised temperature calculation unit 21 and passed time period $t$ from time measuring unit 23, and addition unit 24 for calculating equilibrium temperature Tp by adding addition value U to measured temperature T.

Reference numeral 3 denotes a display unit for performing a digital display of predicted equilibrium temperature Tp.

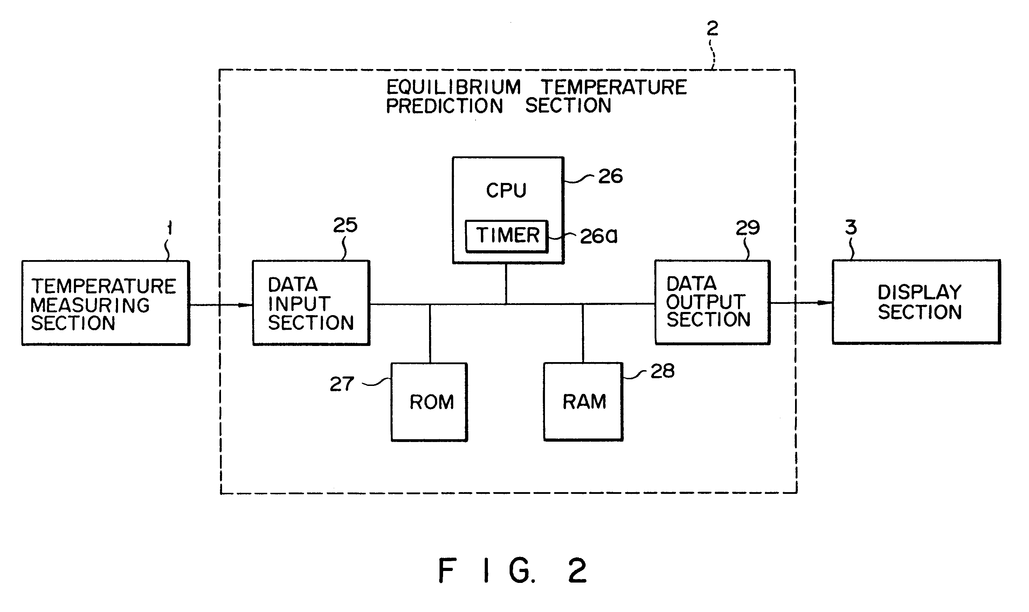

Fig. 2 shows an electronic clinical thermometer of the embodiment realized by a microprocessor. In this case, temperature measuring unit 1 and display unit 3 are the same as those in Fig. 1.

Equilibrium temperature prediction unit 2 comprises data input unit 25 for receiving a measured temperature from temperature measuring unit 1 in the form of predetermined digital data, ROM 27 for storing processing programs, correction data, and the like, RAM 28 for storing temperature data from data input unit 25 and utilizing the data for auxiliary processing, CPU 26 for calculating/processing raised temperature $\Delta T$ in a predetermined passed time period, addition value U, predicted equilibrium temperature Tp, and the like using RAM 28 in accordance with the processing programs stored in ROM 27, and data output unit 29 for outputting calculated equilibrium temperature Tp to display unit 3. Note that timer 26a is arranged in CPU 26 to measure a passed time period.

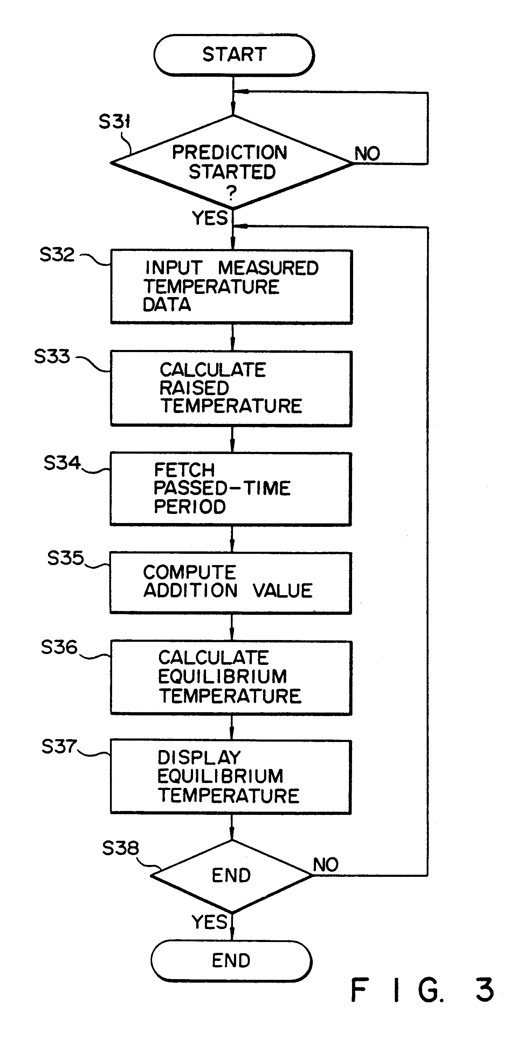

Fig. 3 is a flow chart showing an operation of the electronic clinical thermometer according to the embodiment.

⟨Step S31⟩ Determination of Prediction Start

In this step, the electronic clinical thermometer checks whether the conditions for starting prediction are satisfied or not. According to the embodiment, the conditions of prediction start are:

(1) Measured temperature T is 30°C or more, and
(2) The temperature is raised by 0.32°C or more in four seconds.

When these conditions are satisfied, the flow advances to step S32 and prediction is started.

⟨Step S32⟩ Input of Measured Temperature Data

Temperature data from temperature measuring unit 1 is input. Since the temperature data supplied from temperature measuring unit 1 at this time is not linear, the data is corrected by correction data prestored in ROM 27.

⟨Step S33⟩ Calculation of Raised Temperature

In this embodiment, raised temperature $\Delta T$ in a period of 20 seconds is calculated. This is because if a predicted temperature is determined on the basis of raised temperature $\Delta T$ in a period as short as 10 seconds, only a local change in temperature is obtained and only an addition value corresponding to such a local temperature change is determined, thereby degrading precision of the predicted temperature. On the other hand, if a predicted temperature is determined on the basis of raised temperature $\Delta T$ in a relatively long period of about 40 seconds, the prediction method of determining a temperature at high speed loses its meaning in terms of processing speed. In this step, the temperature data is subjected to smoothing and peak hold processing in consideration of variations in measured temperature. This method will be described in detail later.

⟨Step S34⟩ Fetch of Passed Time Period

Passed time period $t$ from the start of prediction is fetched from timer 6a.

⟨Step S35⟩ Computation of Addition Value

Addition value U is computed from raised temperature $\Delta T$ calculated in step S33 and fetched passed time period $t$ in step S34. In this embodiment, addition value U is computed by:

$$U = (at + b)\Delta T + (ct + d)$$

Note that this equation will be described in detail later.

As will be described below, in practice, addition value U is weighted on the basis of passed time period t so as to smoothly change a predicted equilibrium temperature.

⟨Step S36⟩ Calculation of Equilibrium Temperature

An estimated equilibrium temperature is calculated by adding addition value U calculated in step S35 to measured temperature T input in step S32 as follows:

$$Tp = T + U$$

⟨Step S37⟩ Display of Equilibrium Temperature

Predicted equilibrium temperature tp calculated in step S36 is displayed.

⟨Step S38⟩ Determination of Prediction End

The end of prediction is determined. If NO is obtained in this step, the flow returns to step S32 and steps S32 to S38 are repeated. In this embodiment, prediction is finished when a rise in temperature in a period of 20 seconds is smaller than threshold value $\gamma$ and a measured temperature drops by 0.1°C or more.

The fundamental operations are performed in the above-described manner. In practice, however, various contrivances are added to these operations, as seen in the following sample.

A method of calculating addition value U of the electronic clinical thermometer according to the embodiment will be described.

The method of calculating an addition value for predicting an equilibrium temperature in a short period of measurement time in the electronic clinical thermometer is established on the basis of a large volume of clinical body temperature data.

A large number of body temperature curves are obtained from the respective portions to be measured (e.g., armpit and mouth). Then, the rates of change in temperature and addition values in corresponding periods in the body temperature rise curves separately obtained from the respective portions are carefully studied as the variables for providing a good explanation to the differences (predicted addition values) between measured body temperatures at the measuring start periods and equilibrium temperatures.

In the large number of body temperature curves, a relationship between an addition value and time at a certain rate of change in temperature is plotted. Similarly, a relationship at another rate of change in temperature is plotted. In this manner, relationships between addition values and time at various rates of change in temperature are obtained so that linear approximation of the respective rates of change in temperature can be made.

If the relationships between the gradients and Y segments in the respective linear functions, and the corresponding rates of change in temperature are plotted, the gradient (A) and the Y segment (B) can be represented by a linear relationship with respect to the rates of change in temperature.

More specifically, the resultant relationship is given as:

$$U = Ant + Bn$$
$$An = a\frac{dT}{dt} + c$$
$$Bn = a\frac{dT}{dt} + d$$

Then,

$$\begin{aligned}
U &= Tp - T \\
&= (a\frac{dT}{dt} + c)t + b\frac{dT}{dt} + d \qquad \ldots(1) \\
&= (at + b)\frac{dT}{dt} + (ct + d) \qquad \ldots(2)
\end{aligned}$$

4

where Tp is an equilibrium temperature and T is a currently measured temperature.

That is, equation (2) for obtaining a predicted addition value is established.

In the embodiment, if measured temperature rise ΔT in a period of 20 seconds is provided as $\frac{dT}{dt}$ , the equation shown in step S35 is established. Note that the values shown in Tables 1 and 2 were obtained as values a, b, c, and d.

## Table 1

| | Armpit | | |
|---|---|---|---|
| | t < 51 | 51 ≤ t < 82 | 82 ≤ t |
| a | 0.0449 | ← | 0.0097 |
| b | -0.77 | ← | 2.12 |
| c | 0.68 | ← | 0.15 |
| d | -0.0069 | ← | -0.0004 |

## Table 2

| | Armpit | | |
|---|---|---|---|
| | t < 80 | 80 ≤ t < 100 | 110<T |
| a | 0.0235 | 0.0128 | 0 |
| b | 0.242 | 0.624 | 2.034 |
| c | 0.352 | 0.077 | 0 |
| d | -0.0041 | -0.0007 | 0 |

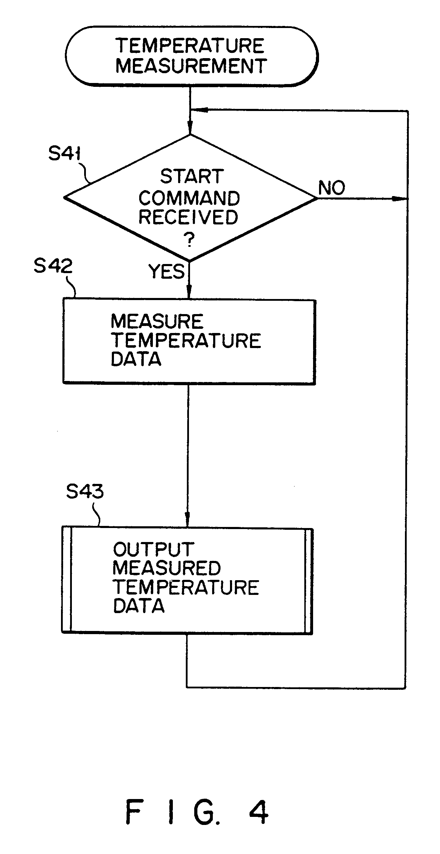

Figs. 4, 5, 6A and 6B are flow charts showing operations of a sample of the electronic clinical thermometer according to the embodiment of the present invention.

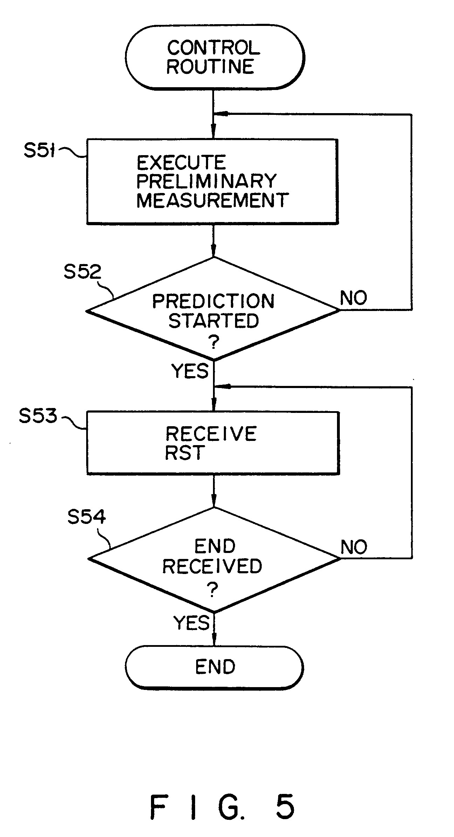

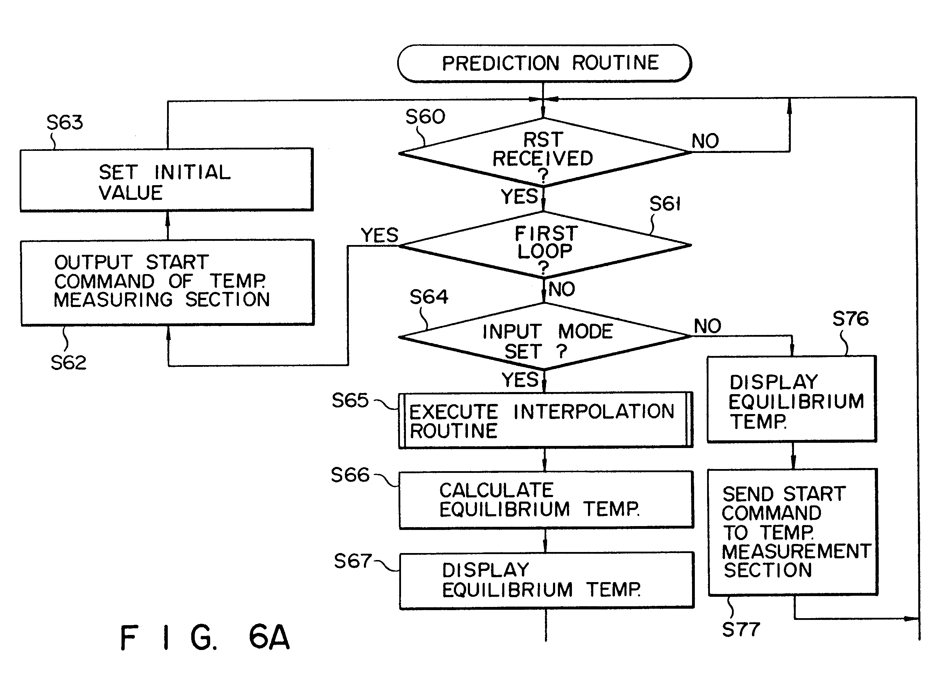

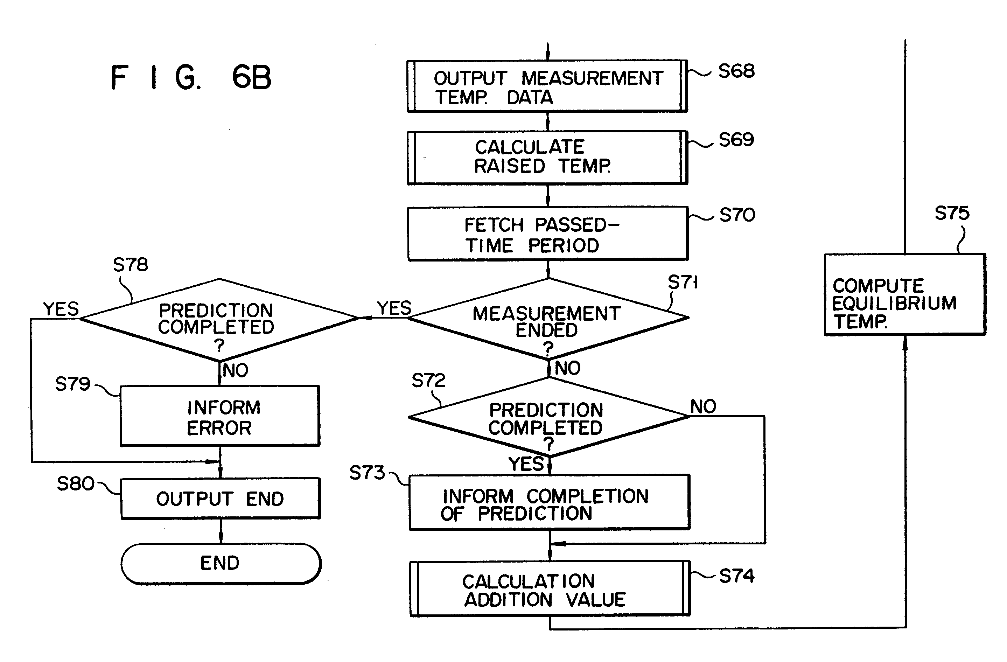

The flow charts shown in Figs. 4 to 6B may be formed by software or hardware. In the sample, from the viewpoint of compactness and processing speed, temperature measurement in Fig. 4 and the control routine in Fig. 5 are performed by hardware, whereas the prediction routine in Figs. 6A and 6B is performed by software.

The operations will be sequentially described below.

When the electronic clinical thermometer is turned on, preliminary measurement is started in step S51 in Fig. 5. In next step S52, the flow waits until the measurement result of this preliminary measurement satisfies the prediction start conditions. The conditions are described in step S31 in Fig. 3. When the prediction start conditions are satisfied, the flow advances to step S53, and a reset signal (to be referred to as the RST signal hereinafter) is sent. Steps S53 and S54 are repeated until an end signal (to be referred to as the END signal hereinafter) is supplied from CPU 26 while the RST signal is sent every one second.

On the CPU 26 side, the flow waits for the RST signal to be received in step S60. When the RST signal is received, the prediction routine is started. The prediction routine is ended by sending the END signal in step S80 upon completion of the routine. The hardware and the software are synchronized with each other by the RST and END signals. When the RST signal is received, the flow advances to step S61. If it is a first loop, the flow advances to step S62, and a start command is output to temperature measuring unit 1. In step S63, an initial value is set at a predetermined location in RAM 28.

In response to the start command in step S62, temperature measuring unit 1, which has been waiting for the start command in step S41 in Fig. 4, measures temperature data in step S42, and outputs the measured temperature data in step S43. In this case, the temperature data is measured on the basis of a frequency generated by an RC circuit by switching a reference resistor and a thermistor. Since this method is known to a person skilled in the art, it is not described in detail. The measured temperature data may be output in step S43 without being processed. In this sample, however, the values from the thermistor are

5

subjected to linear correction and then are output. This linear correction may be performed by CPU 26.

When the RST signal is received again after one second, the flow advances from step S62 to step S64. In step S64, it is checked whether this loop is in an input mode for entering the measured temperature or not. In this sample, the mode is reversed every time the loop in Figs. 6A and 6B is repeated.

First, the flow advances to step S65 in the input mode and the interpolation routine is performed. This interpolation routine is executed so as to prevent a rapid change in addition value U by calculating:

$$\{(U_{n-1} + U_n)/2\} \rightarrow U_n$$

and substituting the addition value for a mean value of the addition value and the immediately preceding addition value. In step S66, an equilibrium temperature is calculated by adding the interpolated addition value to the measured temperature. The resultant equilibrium temperature is displayed in step S67.

In step S68, the current measured temperature output in step S43 in Fig. 4 is input. In this sample, the measured temperature data is subjected to smoothing processing by averaging three data, i.e., the currently measured temperature data and the two preceding measured temperature data according to the following calculation:

$$(T_{n-2} + T_{n-1} + T_n)/3$$

If this value Is smaller than the preceding data, peak hold processing is performed by utilizing the preceding data, thereby preventing an erroneous measurement caused by variations in measured temperature data.

In the next step S69, in this sample, a raised temperature in a period of 20 seconds is calculated. This raised temperature is not calculated on the basis of the difference between the current temperature and the temperature 20 seconds before. In this sample, since the RST signal is received every one second and measurement data is input every two seconds, a raised temperature in a period of 20 seconds is calculated by adding raised temperature $D_n$ obtained every two seconds to each other 10 times according to

$$\sum_{n=0}^{9}$$

$D_n$.

In step S70, a passed time period from the reception of the initial RST signal is fetched.

In step S71, the end of measurement is determined. In addition to the conditions described in step S38 in Fig. 3, a case wherein the electronic clinical thermometer is removed during a measurement is regarded as one of the conditions of the measurement end. This condition is satisfied when a measured temperature data drops by 0.2°C or more. In step S78, it is determined whether the measurement is ended after a prediction is established. If it is ended before a prediction is established, an error is informed by a buzzer, a display, or the like in step S79. The END signal is sent in step S80 and sending of the RST signal is ended. If an error is not caused at this time, an equilibrium temperature is fixed on a display portion.

When the measurement end conditions are not satisfied, the flow advances to step S72. In step S72, it is determined whether a prediction is established. The condition of establishing a prediction is satisfied when a raised temperature in a period of 20 seconds is smaller than threshold value $\gamma$.

This condition constitutes part of the measurement end conditions. One of the measurement end conditions may be considered as a measured temperature drops by 0.1°C or more after a prediction is established. When the prediction is established, it is informed by a buzzer or the like in step S73. That is, the above-described measurement end condition corresponds to a case wherein a person to be measured removes the electronic clinical thermometer upon hearing a sound of the buzzer.

In step S74, an addition value is calculated on the basis of raised temperature

$$\sum_{n=0}^{9}$$

$D_n$ calculated in step S74 and passed time period $t$ fetched in step S70. In this sample, the following equation is established according to step S35 in Fig. 3:

6

EP 0 290 352 B1

$$U = (at + b) \sum_{n=0}^{9} D + (ct + d)$$

In addition, according to the sample, interpolation processing is performed as in step S65 so that addition value U is smoothly changed.

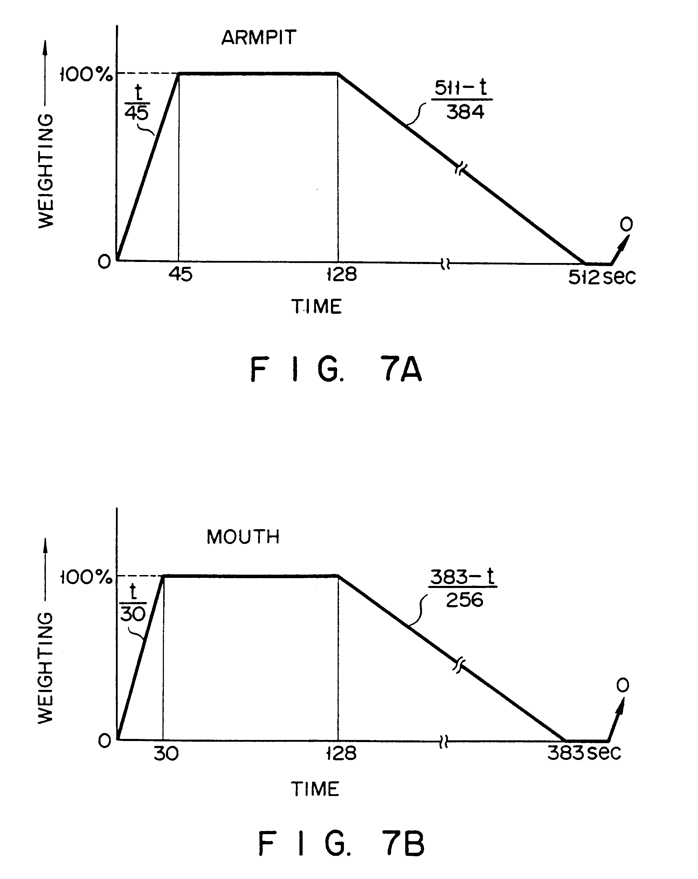

Furthermore, in the sample, an addition value is weighted in accordance with a passed time period so as to prevent variations in value after prediction is started, thereby smoothly shifting the flow to the display processing after a predetermined period of time. The weighting coefficients are shown in Figs. 7A and 7B.

In step S75, the addition value calculated in step S74 is added to the measured temperature to calculate an equilibrium temperature. Then, the flow returns to step S60 and waits for the RST signal to be received.

When the next RST signal is supplied, the flow advances from step S64 to step S76. In step S76, the equilibrium temperature calculated in step S75 is displayed. In step S77, the next measurement start command is sent to temperature measuring unit 1. Then, the flow returns to step S60 to wait for the next RST signal to be received.

In this manner, the input and non-input modes are alternately looped until the measurement end conditions are satisfied in step S71.

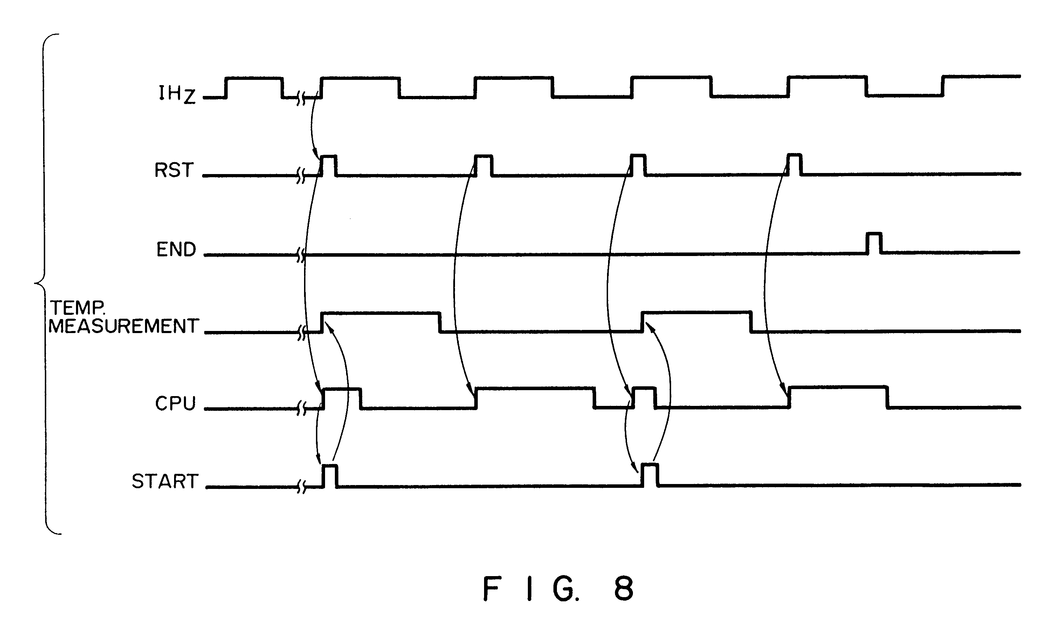

Fig. 8 shows a timing chart of this measurement. In this case, a High-level portion of the CPU signal represents the timing when CPU 26 is operated. A High-level portion of the TEMP MEASUREMENT signal represents the timing when temperature measuring unit 1 measures a temperature. As is apparent from this timing chart, the period of temperature measurement is two seconds while the period of predicted equilibrium temperature display is one second.

Note that the embodiment is only an example for realizing the present invention. In addition, the sample shown in Figs. 4 to 8 is more limited than the embodiment, and hence the technical principle of the present invention is not limited to the embodiment and the sample. The main characteristic feature of the technical principle of the present invention is that addition values for predicting an equilibrium temperature are sequentially calculated on the basis of amounts of temperature rise and passed time periods, and the calculation method thereof is generalized.

## Claims

### Claims for the following Contracting States : BE, DE, FR, GB, IT

1. An electronic clinical thermometer for predicting an equilibrium temperature prior to a real-time measured temperature, comprising:

   temperature measuring means (1) for measuring a temperature of a contact portion with a portion to be measured;

   temperature calculating means (21) for calculating the raised temperature $\delta T$ in a predetermined period of time on the basis of a temperature measured by said temperature measuring means;

   time measuring means (23) for measuring a passed time period from the start of prediction of an equilibrium temperature;

   computing means (22) for computing an addition value U on the basis of the risen temperature, $\delta T$, calculated by said temperature calculating means and the passed time period measured by said time measuring means;

   adding means (24) for adding the addition value, U, computed by said computing means to the temperature measured by said measuring temperature; and

   display means for displaying an addition result from said adding means as a predicted equilibrium temperature;

   characterized in that said computing means (22) computes the following operation:

   $(at + b)\Delta T + (ct + d)$

   where $a$, $b$, $c$, and $d$ are constants, $t$ is a passed time, and $\Delta T$ is a raised temperature.

2. A thermometer according to claim 1, characterized in that said temperature calculating means (21) adds a raised temperature in a predetermined unit period of time a predetermined number of times so as to calculate the raised temperature in the predetermined passed period of time.

7

EP 0 290 352 B1

3. A thermometer according to claim 1, characterized in that said temperature calculating means (21) uses a mean value of temperatures measured by said temperature measuring means a predetermined number of times for calculation of the raised temperature.

4. A thermometer according to claim 1, characterized in that said temperature calculating means (21) uses a preceding measured temperature when a measured temperature drops.

5. A thermometer according to claim 1, characterized in that said computing means (22) comprises weighting means (26) for weighting an addition value in accordance with a passed time period and a portion to be measured.

6. A thermometer according to claim 1, further comprising prediction start means (26) for starting prediction of an equilibrium temperature when conditions of a predetermined measured temperature and a predetermined temperature raise are satisfied.

7. A thermometer according to claim 1, further comprising prediction establishment informing means (26) for informing that a prediction of equilibrium temperature is established when conditions that a predetermined period of time is elapsed and a raised temperature is lower than a predetermined temperature are satisfied.

8. A thermometer according to claim 1, further comprising measurement ending means (26) for ending measurement when conditions that a predetermined period of time is elapsed and a measured temperature drops below a predetermined temperature are satisfied.

9. A thermometer according to claim 1, further comprising error informing means (3) for informing an error when a condition of a predetermined measured temperature drop prior to establishment of prediction is satisfied.

**Claims for the following Contracting States : NL, SE**

1. An electronic clinical thermometer for predicting an equilibrium temperature prior to a real-time measured temperature, comprising:

temperature measuring means (1) for measuring a temperature of a contact portion with a portion to be measured;

calculating means (21) for calculating the temperature rise $\delta T$ in a predetermined period of time on the basis of a temperature measured by said temperature measuring means;

time measuring means (23) for measuring a passed time period from the start of prediction of an equilibrium temperature;

computing means (22) for computing an addition value U on the basis of the risen temperature, $\delta T$, calculated by said temperature calculating means and the passed time period measured by said time measuring means;

adding means (24) for adding the addition value computed by said computing means to the temperature measured by said measuring temperature; and

display means for displaying an addition result from said adding means as a predicted equilibrium temperature.

2. A thermometer according to claim 1, characterized in that said temperature calculating means (21) adds a raised temperature in a predetermined unit period of time a predetermined number of times so as to calculate the raised temperature in the predetermined passed period of time.

3. A thermometer according to claim 1, characterized in that said temperature calculating means (21) uses a mean value of temperatures measured by said temperature measuring means a predetermined number of times for calculation of the raised temperature.

4. A thermometer according to claim 1, characterized in that said temperature calculating means (21) uses a preceding measured temperature when a measured temperature drops.

8

**5.** A thermometer according to claim 1, characterized in that said addition value computing means (22) computes the following operation:

(at + b)ΔT + (ct + d)

where a, b, c, and d are constants, t is a passed time, and ΔT is a raised temperature.

**6.** A thermometer according to claim 1, characterized in that said computing means (22) comprises weighting means (26) for weighting an addition value in accordance with a passed time period and a portion to be measured.

**7.** A thermometer according to claim 1, further comprising prediction start means (26) for starting prediction of an equilibrium temperature when conditions of a predetermined measured temperature and a predetermined temperature raise are satisfied.

**8.** A thermometer according to claim 1, further comprising prediction establishment informing means (26) for informing that a prediction of equilibrium temperature is established when conditions that a predetermined period of time is elapsed and a raised temperature is lower than a predetermined temperature are satisfied.

**9.** A thermometer according to claim 1, further comprising measurement ending means (26) for ending measurement when conditions that a predetermined period of time is elapsed and a measured temperature drops below a predetermined temperature are satisfied.

**10.** A thermometer according to claim 1, further comprising error informing means (3) for informing an error when a condition of a predetermined measured temperature drop prior to establishment of prediction is satisfied.

**Patentansprüche**

**Patentansprüche für folgende Vertragsstaaten : BE, DE, FR, GB, IT**

**1.** Elektronisches Medizinalthermometer zum Voraussagen einer Gleichgewichtstemperatur vor einer in Echtzeit gemessenen Temperatur mit:
   einer Temperatur messenden Einrichtung (1) zum Messen einer Temperatur eines Kontaktteilbereichs mit einem Teilbereich, der gemessen werden soll;
   einer Temperatur berechnenden Einrichtung (21) zum Berechnen der erhöhten Temperatur δT in einer vorbestimmten Zeitspanne auf der Grundlage einer Temperatur, die durch die Temperatur messende Einrichtung gemessen wird;
   einer Zeit messenden Einrichtung (22) zum Messen einer von dem Start der Voraussage einer Gleichgewichtstemperatur ab vergangenen Zeitspanne;
   einer berechnenden Einrichtung (22) zum Berechnen eines Additionswertes U auf der Grundlage der gestiegenen Temperatur δT, die durch die die Temperatur berechnende Einrichtung berechnet wird, und der vergangenen Zeitspanne, die durch die die Zeit messende Einrichtung gemessen wird;
   einer addierenden Einrichtung (24) zum Addieren des Additionswertes U, der durch die berechnende Einrichtung berechnet wird, zu der Temperatur, die durch die die Temperatur messende Einrichtung gemessen wird; und
   einer Anzeigevorrichtung zum Anzeigen eines Additionsergebnisses der addierenden Einrichtung als eine vorausgesagte Gleichgewichtstemperatur;
   dadurch gekennzeichnet, daß die berechnende Einrichtung (22) die folgende Operation berechnet:

(at + b)ΔT + (ct + d)

wobei a, b, c und d Konstanten sind, t eine vergangene Zeit ist und ΔT eine erhöhte Temperatur ist.

**2.** Thermometer nach Anspruch 1, dadurch gekennzeichnet, daß die Temperatur berechnende Einrichtung (21) eine erhöhte Temperatur in einer vorbestimmten Zeitspanneneinheit eine vorbestimmte Anzahl von Zeiten addiert, um die erhöhte Temperatur in der vorherbestimmten abgelaufenen Zeitspanne zu berechnen.

**3.** Thermometer nach Anspruch 1, dadurch gekennzeichnet, daß die Temperatur berechnende Einrichtung (21) einen Mittelwert der Temperaturen, welche durch die Temperatur messende Einrichtung zu einer vorherbestimmten Anzahl von Zeiten gemessen sind, zur Berechnung der erhöhten Temperatur verwendet.

**4.** Thermometer nach Anspruch 1, dadurch gekennzeichnet, daß die Temperatur berechnende Einrichtung (21) eine vorausgehend gemessene Temperatur verwendet, wenn eine gemessene Temperatur abfällt.

**5.** Thermometer nach Anspruch 1, dadurch gekennzeichnet, daß die berechnende Einrichtung (22) eine gewichtende Einrichtung (26) zum Gewichten eines Additionswertes entsprechend einer vergangenen Zeitspanne und eines Teilbereichs, der gemessen werden soll, umfaßt.

**6.** Thermometer nach Anspruch 1, welches ferner eine Voraussagestarteinrichtung (26) zum Starten der Voraussage einer Gleichgewichtstemperatur umfaßt, wenn Bedingungen bezüglich einer vorbestimmten gemessenen Temperatur und eines vorbestimmten Temperaturanstiegs erfüllt sind.

**7.** Thermometer nach Anspruch 1, welches ferner eine Voraussage-Festsetz-Informations-Einrichtung (26) zum Informieren, daß eine Voraussage einer Gleichgewichtstemperatur eingerichtet ist, umfaßt, wenn Bedingungen, daß eine vorherbestimmte Zeitspanne abgelaufen ist und eine erhöhte Temperatur niedriger ist als eine vorherbestimmte Temperatur, erfüllt sind.

**8.** Thermometer nach Anspruch 1, welches ferner eine Messung beendende Einrichtung (26) zum Beenden der Messung umfaßt, wenn Bedingungen, daß eine vorherbestimmte Zeitspanne abgelaufen ist und eine gemessene Temperatur unter eine vorherbestimmte Temperatur abfällt, erfüllt sind.

**9.** Thermometer nach Anspruch 1, welches ferner eine Fehler angebende Einrichtung (3) zum Angeben eines Fehlers umfaßt, wenn eine Bedingung eines vorherbestimmten gemessenen Temperaturabfalls vor der Einrichtung der Vorhersage erfüllt ist.

**Patentansprüche für folgende Vertragsstaaten : NL, SE**

**1.** Elektronisches Medizinalthermometer zum Voraussagen einer Gleichgewichtstemperatur vor einer in Echtzeit gemessenen Temperatur mit:
einer Temperatur messenden Einrichtung (1) zum Messen einer Temperatur eines Kontaktteilbereichs mit einem Teilbereich, der gemessen werden soll;
einer berechnenden Einrichtung (21) zum Berechnen des Temperaturanstiegs $\delta T$ in einer vorbestimmten Zeitspanne auf der Grundlage einer Temperatur, die durch die Temperatur messende Einrichtung gemessen wird;
einer Zeit messenden Einrichtung (22) zum Messen einer von dem Start der Voraussage einer Gleichgewichtstemperatur ab vergangenen Zeitspanne;
einer berechnenden Einrichtung (22) zum Berechnen eines Additionswertes U auf der Grundlage der gestiegenen Temperatur $\delta T$, die durch die die Temperatur berechnende Einrichtung berechnet wird, und der vergangenen Zeitspanne, die durch die die Zeit messende Einrichtung gemessen wird;
einer addierenden Einrichtung (24) zum Addieren des Additionswertes , der durch die berechnende Einrichtung berechnet wird, zu der Temperatur, die durch die die Temperatur messende Einrichtung gemessen wird; und
einer Anzeigevorrichtung zum Anzeigen eines Additionsergebnisses der addierenden Einrichtung als eine vorausgesagte Gleichgewichtstemperatur.

**2.** Thermometer nach Anspruch 1, dadurch gekennzeichnet, daß die Temperatur berechnende Einrichtung (21) eine erhöhte Temperatur in einer vorbestimmten Zeitspanneneinheit eine vorbestimmte Anzahl von Zeiten addiert, um die erhöhte Temperatur in der vorherbestimmten abgelaufenen Zeitspanne zu berechnen.

**3.** Thermometer nach Anspruch 1, dadurch gekennzeichnet, daß die Temperatur berechnende Einrichtung (21) einen Mittelwert der Temperaturen, welche durch die Temperatur messende Einrichtung zu einer vorherbestimmten Anzahl von Zeiten gemessen sind, zur Berechnung der erhöhten Temperatur verwendet.

**4.** Thermometer nach Anspruch 1, dadurch gekennzeichnet, daß die Temperatur berechnende Einrichtung (21) eine vorausgehend gemessene Temperatur verwendet, wenn eine gemessene Temperatur abfällt.

**5.** Thermometer nach Anspruch 1, dadurch gekennzeichnet, daß die Additionswert berechnende Einrichtung (22) die folgende Operation berechnet:

$$(at + b) \Delta T + (ct + d)$$

wobei $\underline{a}$, $\underline{b}$, $\underline{c}$ und $\underline{d}$ Konstanten sind, $\underline{t}$ eine vergangene Zeit ist und $\Delta T$ eine erhöhte Temperatur ist.

**6.** Thermometer nach Anspruch 1, dadurch gekennzeichnet, daß die berechnende Einrichtung (22) eine gewichtende Einrichtung (26) zum Gewichten eines Additionswertes entsprechend einer vergangenen Zeitspanne und eines Teilbereichs, der gemessen werden soll, umfaßt.

**7.** Thermometer nach Anspruch 1, welches ferner eine Voraussagestarteinrichtung (26) zum Starten der Voraussage einer Gleichgewichtstemperatur umfaßt, wenn Bedingungen bezüglich einer vorbestimmten gemessenen Temperatur und eines vorbestimmten Temperaturanstiegs erfüllt sind.

**8.** Thermometer nach Anspruch 1, welches ferner eine Voraussage-Festsetz-Informations-Einrichtung (26) zum Informieren, daß eine Voraussage einer Gleichgewichtstemperatur eingerichtet ist, umfaßt, wenn Bedingungen, daß eine vorherbestimmte Zeitspanne abgelaufen ist und eine erhöhte Temperatur niedriger ist als eine vorherbestimmte Temperatur, erfüllt sind.

**9.** Thermometer nach Anspruch 1, welches ferner eine Messung beendende Einrichtung (26) zum Beenden der Messung umfaßt, wenn Bedingungen, daß eine vorherbestimmte Zeitspanne abgelaufen ist und eine gemessene Temperatur unter eine vorherbestimmte Temperatur abfällt, erfüllt sind.

**10.** Thermometer nach Anspruch 1, welches ferner eine Fehler angebende Einrichtung (3) zum Angeben eines Fehlers umfaßt, wenn eine Bedingung eines vorherbestimmten gemessenen Temperaturabfalls vor der Einrichtung der Vorhersage erfüllt ist.

**Revendications**
**Revendications pour les Etats contractants suivants : BE, DE, FR, GB, IT**

**1.** Thermomètre médical électronique servant à prédire la température d'équilibre avant la température mesurée en temps réel, comprenant :
un moyen de mesure de température (1) servant à mesurer la température d'une partie en contact avec une partie à mesurer ;
un moyen de calcul de température (21) servant à calculer l'augmentation de température $\Delta T$ en un laps de temps prédéterminé en fonction de la température mesurée par ledit moyen de mesure de température ;
un moyen de mesure de temps (23) servant à mesurer le laps de temps passé depuis le début de la prédiction de la température d'équilibre ;
un moyen de calcul (22) servant à calculer une valeur d'addition U à partir de l'augmentation de température $\Delta T$ calculée par ledit moyen de calcul de température et du laps de temps passé qui a été mesuré par ledit moyen de mesure de temps ;
un moyen d'addition (24) servant à ajouter la valeur d'addition U, calculée par ledit moyen de calcul, à la température mesurée par ledit moyen de mesure de température ; et
un moyen d'affichage servant à afficher le résultat d'addition fourni par ledit moyen d'addition au titre de la température d'équilibre prédite ;
caractérisé en ce que ledit moyen de calcul (22) calcule l'expression suivante :

$$(at + b)\Delta T + (ct + d)$$

où $\underline{a}$, $\underline{b}$, $\underline{c}$ et $\underline{d}$ sont des constantes, $\underline{t}$ est le temps écoulé, et $\Delta T$ est une augmentation de température.

**2.** Thermomètre selon la revendication 1, caractérisé en ce que ledit moyen de calcul de température (21) ajoute les augmentations de température en un laps de temps unitaire prédéterminé un nombre prédéterminé de fois afin de calculer l'augmentation de température au cours du laps de temps passé prédéterminé.

3. Thermomètre selon la revendication 1, caractérisé en ce que ledit moyen de calcul de température (21) utilise une valeur moyenne de températures mesurées par ledit moyen de mesure de température un nombre prédéterminé de fois pour calculer l'augmentation de température.

4. Thermomètre selon la revendication 1, caractérisé en ce que ledit moyen de calcul de température (21) utilise une température mesurée précédente lorsque la température mesurée chute.

5. Thermomètre selon la revendication 1, caractérisé en ce que ledit moyen de calcul (22) comprend un moyen de pondération (26) servant à pondérer la valeur d'addition en fonction du laps de temps passé et de la partie devant être mesurée.

6. Thermomètre selon la revendication 1, comprenant en outre un moyen de démarrage de prédiction (26) servant à faire commencer la prédiction d'une température d'équilibre lorsque les conditions d'une température mesurée prédéterminée et d'une augmentation de température prédéterminée sont satisfaites.

7. Thermomètre selon la revendication 1, comprenant en outre un moyen (26) d'information de l'établissement d'une prédiction servant à informer qu'une prédiction de température d'équilibre a été établie lorsque les conditions selon lesquelles un laps de temps prédéterminé s'est écoulé et l'augmentation de température est inférieure à une température prédéterminée sont satisfaites.

8. Thermomètre selon la revendication 1, comprenant en outre un moyen d'arrêt de mesure (26) servant à mettre fin à la mesure lorsque les conditions selon lesquelles un laps de temps prédéterminé s'est écoulé et la température mesurée chute au-dessous d'une température prédéterminée sont satisfaites.

9. Thermomètre selon la revendication 1, comprenant en outre un moyen de signalisation d'erreur (3) servant à informer de l'existence d'une erreur lorsqu'une condition selon laquelle une température mesurée prédéterminée chute avant l'établissement de la prédiction est satisfaite.

**Revendications pour les Etats Contractants suivants : NL, SE**

1. Thermomètre médical électronique servant à prédire la température d'équilibre avant la température mesurée en temps réel, comprenant :
   un moyen de mesure de température (1) servant à mesurer la température d'une partie en contact avec une partie à mesurer ;
   un moyen de calcul de température (21) servant à calculer l'augmentation de température $\Delta T$ en un laps de temps prédéterminé en fonction de la température mesurée par ledit moyen de mesure de température ;
   un moyen de mesure de temps (23) servant à mesurer le laps de temps passé depuis le début de la prédiction de la température d'équilibre ;
   un moyen de calcul (22) servant à calculer une valeur d'addition U à partir de l'augmentation de température $\Delta T$ calculée par ledit moyen de calcul de température et du laps de temps passé qui a été mesuré par ledit moyen de mesure de temps ;
   un moyen d'addition (24) servant à ajouter la valeur d'addition U, calculée par ledit moyen de calcul, à la température mesurée par ledit moyen de mesure de température ; et
   un moyen d'affichage servant à afficher le résultat d'addition fourni par ledit moyen d'addition au titre de la température d'équilibre prédite.

2. Thermomètre selon la revendication 1, caractérisé en ce que ledit moyen de calcul de température (21) ajoute les augmentations de température en un laps de temps unitaire prédéterminé un nombre prédéterminé de fois afin de calculer l'augmentation de température au cours du laps de temps passé prédéterminé.

3. Thermomètre selon la revendication 1, caractérisé en ce que ledit moyen de calcul de température (21) utilise une valeur moyenne de températures mesurées par ledit moyen de mesure de température un

EP 0 290 352 B1

nombre prédéterminé de fois pour calculer l'augmentation de température.

4. Thermomètre selon la revendication 1, caractérisé en ce que ledit moyen de calcul de température (21) utilise une température mesurée précédente lorsque la température mesurée chute.

5. Thermomètre selon la revendication 1, caractérisé en ce que ledit moyen de calcul (22) calcule l'expression suivante :

(at + b)ΔT + (ct + d)

où $a$, $b$, $c$ et $d$ sont des constantes, $t$ est le temps écoulé, et ΔT est une augmentation de température.

6. Thermomètre selon la revendication 1, caractérisé en ce que ledit moyen de calcul (22) comprend un moyen de pondération (26) servant à pondérer la valeur d'addition en fonction du laps de temps passé et de la partie devant être mesurée.

7. Thermomètre selon la revendication 1, comprenant en outre un moyen de démarrage de prédiction (26) servant à faire commencer la prédiction d'une température d'équilibre lorsque les conditions d'une température mesurée prédéterminée et d'une augmentation de température prédéterminée sont satisfaites.

8. Thermomètre selon la revendication 1, comprenant en outre un moyen (26) d'information de l'établissement d'une prédiction servant à informer qu'une prédiction de température d'équilibre a été établie lorsque les conditions selon lesquelles un laps de temps prédéterminé s'est écoulé et l'augmentation de température est inférieure à une température prédéterminée sont satisfaites.

9. Thermomètre selon la revendication 1, comprenant en outre un moyen d'arrêt de mesure (26) servant à mettre fin à la mesure lorsque les conditions selon lesquelles un laps de temps prédéterminé s'est écoulé et la température mesurée chute au-dessous d'une température prédéterminée sont satisfaites.

10. Thermomètre selon la revendication 1, comprenant en outre un moyen de signalisation d'erreur (3) servant à informer de l'existence d'une erreur lorsqu'une condition selon laquelle une température mesurée prédéterminée chute avant l'établissement de la prédiction est satisfaite.

F I G. 1

EP 0 290 352 B1

EP 0 290 352 B1

F I G. 2

START

S31 — PREDICTION STARTED ? — NO

YES

S32 — INPUT MEASURED TEMPERATURE DATA

S33 — CALCULATE RAISED TEMPERATURE

S34 — FETCH PASSED-TIME PERIOD

S35 — COMPUTE ADDITION VALUE

S36 — CALCULATE EQUILIBRIUM TEMPERATURE

S37 — DISPLAY EQUILIBRIUM TEMPERATURE

S38 — END — NO

YES

END

F I G. 3

F I G. 4

F I G. 5

18

F I G. 6A

EP 0 290 352 B1

# FIG. 6B

```
                              ┌──────────────────────┐
                              │ OUTPUT MEASUREMENT   ├──── S68
                              │ TEMP. DATA           │
                              └──────────┬───────────┘
                                         │
                              ┌──────────┴───────────┐
                              │ CALCULATE            ├──── S69
                              │ RAISED TEMP.         │
                              └──────────┬───────────┘
                                         │
                              ┌──────────┴───────────┐
                              │ FETCH PASSED-        ├──── S70
                              │ TIME PERIOD          │
                              └──────────┬───────────┘
```

S78

YES ── PREDICTION COMPLETED ? ── YES ── MEASUREMENT ENDED ? (S71) ── NO

COMPUTE EQUILIBRIUM TEMP. — S75

S79 — INFORM ERROR

S72 — PREDICTION COMPLETED ? — NO

NO — (from MEASUREMENT ENDED)

S80 — OUTPUT END

YES

S73 — INFORM COMPLETION OF PREDICTION

END

CALCULATION ADDITION VALUE — S74

EP 0 290 352 B1

F I G. 7A

F I G. 7B

F I G. 8

EP 0 290 352 B1